# EUROPÄISCHE PATENTSCHRIFT

(11) **EP 1 631 638 B1**
(45) Veröffentlichungstag und Bekanntmachung des Hinweises auf die Patenterteilung: **15.12.2010**
(21) Anmeldenummer: 04733770.4
(22) Anmeldetag: 19.05.2004
(51) Int. Cl.: C09J 7/04, C09J 101/28, C09J 103/08

(54) **KLEBSTOFFBESCHICHTETE TAPETE**
ADHESIVE-COATED WALLPAPER
PAPIER PEINT ENCOLLE

(30) Priorität: 30.05.2003 DE 10324472
(43) Veröffentlichungstag der Anmeldung: 08.03.2006
(73) Patentinhaber: Henkel AG & Co. KGaA, 40589 Düsseldorf (DE)
(72) Erfinder: WEGNER, Jürgen, 40549 Düsseldorf (DE); HOFFMANN, Heinz-Peter, 40789 Monheim (DE); SCHÖTTMER, Bernhard, 40789 Monheim (DE); SCHAPER, Werner, 32425 Minden (DE)
(86) Internationale Anmeldenummer: PCT/EP2004/005384
(87) Internationale Veröffentlichungsnummer: WO 2004/106450

(56) Entgegenhaltungen:
- WO-A-99/03945
- DE-A- 2 623 903
- DE-A- 10 227 871
- DE-U- 20 113 109
- GB-A- 1 311 862

## Beschreibung

Die Erfindung betrifft eine Tapete mit einer im trockenen Zustand nicht klebrigen, aber mit Wasser aktivierbaren Klebstoff-Schicht auf ihrer Rückseite sowie ihre Herstellung und Verwendung.

Eine Bindemittelzusammensetzung, die zur Bereitung eines Tapetenkleisters geeignet ist, wird beispielsweise in DE 102 27 871 A1 beschrieben. Die dort aufgeführte Blndemittelzusammensetzung enthält mindestens 10 Gew.-% eines teilchenförmigen retardierten Polysaccharids oder eines Gemischs derartiger Polysaccharide und mindestens 3 Gew.-% eines teilchenförmigen natürlichen oder synthetischen Schichtsilikats oder eines Gemischs solcher Schichtsilikate. Die Herstellung eines Tapetenkteisters aus einer derartigen Bindemittelzusammensetzung erfolgt vor Ort durch den Anwender mittels Einrühren der Zusammensetzung in Wasser, wobei sich beim Aufbringen des Kleisters auf die Tapete Spritzneigung und tatsächlich aufgetragene Menge als kritisch erweisen können.

WO 99/03945 A1 beschreibt Agglomerate aus Stoffen zur Herstellung eines wässrigen Bindemittelsystems, die mindestens ein hydrophiles Sprengmittel enthalten, das in Wasser unlöslich ist und einen Quelldruck erzeugt. Die Agglomerate enthalten als bindendes Basispolymer carboxylierte und/oder alkoxylierte Stärke, Celluloseether, vollsynthetlsche Vinylpolymere und/oder Polyacrylate. Die Agglomerate werden insbesondere zur Herstellung eines klumpenfreien Kleisters verwendet.

Tapeten gemäß Oberbegriff des Hauptanspruches sind seit Jahrzehnten bekannt. So wird in der DE 2623903 A1 eine Tapetenbahn mit einer an ihrer Rückseite vorgesehenen Kleisterbeschichtung beschrieben, welche durch Anfeuchten klebfähig wird. Sie ist dadurch gekennzeichnet, dass der Druckträger aus einem bedruckten Papier oder dergleichen besteht, auf dessen Rückseite eine saugfählge Schicht, insbesondere ein Vliespapier aufkaschiert ist, welche die Kleisterschicht trägt. Die Kleisterschicht wird durch Aufstäuben eines trockenen Leimpulvers auf die befeuchtete Papierbahn oder dergleichen hergestellt. Das Dokument enthält keinen Hinweis auf die Zusammensetzung des Kleisters und auf damit verbundene Eigenschaften wie Anfangshaftung und Verschiebbarkeit der noch feuchten Tapete. In der EP 1 262 591 A1 wird die Herstellung eines Glasfasergewebes bzw. -Vlieses für eine Wandverkleidung beschrieben, welche dank der mehrfachen Beschichtung leicht von der Wand abgezogen werden kann. Die klebende äußerste Schicht besteht aus Stärke sowie evtl. aus zusätzlichen anorganischen Stoffen oder Farbstoffen. Weitere Bindemittel wurden nicht genannt, ebenso nicht die damit verbundenen Aspekte, wie z.B. die Anfangshaftung und Verschiebbarkeit der Bahn.

Aus GB-A-1311862 ist eine trocken abziehbare Tapete bekannt, die aus zwei Lagen zusammengesetzt ist. Die für die Applikation auf der Wand vorgesehene Seite ist mit einer wasseraktivierbaren Klebeschicht versehen, wobei diese Klebeschicht und die Klebeschicht zwischen den beiden Tapetenlagen so ausgebildet sind, dass sich nach dem Aufbringen auf die Wand die obere Lage der Tapete trocken von der an der Wand haftenden unteren Lage abziehen lässt.

In der DE 3018764 A1 wird ein trockenes Beschichtungsmaterial für zu verklebende Papiere und dergleichen, insbesondere von Tapetenrückseiten beschrieben, welches folgende Bestandteile enthält:
a) wasserlösliche, klebende Celluloseether und/oder Stärkeether bzw. Stärkeabbauprodukte wie z.B. Carboxymethylstärke,
b) wenig bzw. nicht klebende hochviskose wässrige Lösungen ergebende Hydrokolloide,
c) Trennmittel,
d) Füllstoffe und
e) Hilfs- und Konservierungsmittel.

Diese Zusammensetzung wird als 10- bis 30%ige Lösung und/oder Dispersion in Wasser in an sich bekannter Weise aufgetragen und dann getrocknet. Damit sollen Tapetenbahnen erhalten werden, die nach dem Eintauchen in Wasser für 10 bis 30 Sek. und nach dem Anquellen des Klebstoffes in 3 bis 8 Min. während des Tapeziervorganges verschiebbar und durch wiederholtes kurzes Abziehen und Richten korrigierbar sind. Auch sollen sie trocken abgezogen werden können. Nachteilig sind dabei aber die langen Eintauch- und Anquell-Zeiten des Klebstoffes. Zusätzlich kann es spezielle Probleme in besonderen Fällen geben, z.B. Delaminierung einer Duplex-Tapete beim Verlegen, wenn die offene Zeit überschritten wird. Außerdem macht sich die Dimensions-Instabilität bei der langen Anquellzeit besonders stark bemerkbar. Schließlich kommt es bei schneller Durchtrocknung zu Verklebungen an den Bahnseiten mit sich selbst.

In der DE 3112180 A1 wird ein trockenes Beschichtungsmaterial für zu verklebende Papiere und dergleichen, insbesondere für Tapetenrückseiten beschrieben, welches folgende Bestandteile umfasst:
a) native Stärke,
b) Carboxymethylcellulose,
c) (Thio-)Harnstoff,
d) Polyacrylamid und/oder Polyoxyethylen sowie
e) Konservierungsmittel und pH-Regulatoren für den pH-Bereich von 5,5 bis 7,5.

Die Beschichtung erfolgt aus einer 10- bis 30%igen Lösung und/oder Dispersion in Wasser in an sich bekannter Weise. Diese Rezeptur ermöglicht ein gutes Eindringen des Kleisters bis in die Tiefe eines rauen Putzuntergrundes sowie eine gute Verschiebbarkeit einer Tapeten zum Ausrichten der Bahnen. Nachteilig ist aber auch hier wieder die Kombination der erwähnten Eigenschaften.

Daraus ergibt sich die Aufgabe, eine Tapete mit einer Klebstoffschicht auf der Rückseite zur Verfügung zu stellen, die trotz ihrer hohen Anfangshaftung im nassen Zustand ihre Verschiebung zur Korrektur zulässt. Der Klebstoff sollte außerdem so schnell eine ausreichend hohe Anfangshaftung haben, dass die Tapete innerhalb von Sekunden nach der Wasser-Benetzung des Klebstoffes an der Wand bzw. Decke kleben bleibt. Dann sollte das Wasser möglichst wieder so schnell und vollständig entfernt werden, dass es sich auf die Dimension der angeklebten Tapete praktisch nicht mehr auswirkt. Natürlich soll die Tapete auch möglichst alle übrigen Anforderungen an eine Tapete erfüllen einschließlich einer einfachen und kostengünstigen Herstellung, einer einfachen und zuverlässigen Anwendung sowie schließlich einer einfachen Entfernung durch Abziehen der trockenen Bahn ohne Papierrückstände vom Untergrund. Im einzelnen ergeben sich folgende Teilaufgaben: Die Kleistervorbeschichtung auf dem Tapetenrücken soll beim Kontakt mit Wasser sekundenschnell aufschließen, sich aber im Ruhezustand nicht im Wasserbad auflösen. Auch bei sehr schnellem Herausziehen der Tapetenbahn aus dem Wasserbad zur Aktivierung der Klebstoffbeschichtung soll die Wasseraufnahme vollständig sein. Die Dauer der Einwirkung von Wasser auf die Tapete (Weichen) sollte deutlich erweitert werden, ohne dass bei einer Verringerung der Dauer die Öffnung der Nähte droht und bei einer Verlängerung der Dauer die Eigenfestigkeit der Tapete drastisch verringert wird. Die Klebstoffbeschichtung soll eine hohe Anfangshaftung und nach der Trocknung eine hohe Endfestigkeit ergeben, die durch ein abgestimmtes Quellvolumen Rauhigkeiten des Untergrundes zu überbrücken vermag und sowohl eine gute Verschiebbarkeit der Tapete - insbesondere mit Muster-bedingten Rapports - bei der Installation als auch eine genügend lange offene Zeit beim Tapezieren sicherstellen. Nahtöffnungen - das bisher schwerwiegendste Problem bei vorgekleisterten Tapeten - sollen ebensowenig auftreten wie die Bildung von klebfreien Luftblasen zwischen Wandbelag und Untergrund. Das Quellvolumen des aufgeschlossenen Kleisters soll speziell im Nahtbereich zudem so bemessen sein, dass zwar eine sichere Verklebung gewährleistet ist, aber kein Klebstoff im Stoßbereich an die Oberfläche penetrieren und somit Verfleckungen auslösen könnte. Zusätzlich soll die Kleistervorbeschichtung so konzipiert sein, dass die Tapete, insbesondere die Vliestapete, problemlos mit einer wässrigen Dispersionsfarbe auch mehrfach überstrichen werden kann, ohne dass es zu Ablösungserscheinungen während des Anstrichsauftrages kommt. Die Kleistervorbeschichtung soll schließlich auch eine restlos trockene Abziehbarkeit der Tapete auch nach mehrfachem Überstreichen nicht beeinträchtigen.

Die erfindungsgemäße Lösung ist den Patentansprüchen zu entnehmen. Sie besteht im wesentlichen in der Auswahl geeigneter Klebstoffkomponenten sowie deren Auftragung auf eine dimensionsstabile Tapete. Gegenstand der Erfindung ist eine Tapete mit einer im trockenen Zustand nicht klebrigen, aber mit Wasser aktivierbaren Klebstoffschicht auf ihrer Rückseite, dadurch gekennzeichnet, dass die Klebstoffschicht folgende Komponenten in folgenden Konzentrationsbereichen, bezogen auf die Klebstoffschicht insgesamt enthält:
A) 0,1 bis 10 Gew.-% an mindestens einem feingemahlenen und retardiert eingestellten Celluloseether,
B) 0,1 bis 15 Gew.-% an mindestens einem pH-Regulator für den Bereich von 9,5 bis 11,5, insbesondere an gemahlender Carboxymethylstärke oder Soda,
C) 0,1 bis 10 Gew.-% mindestens eines feingemahlenen und unretardiert eingestellten Celluloseethers oder Guars HGP,
D) 3 bis 15 Gew.-% mindestens eines Sprengmittels,
E) 60 bis 90 Gew.-% an gemahlener Quellstärke,
F) 0 bis 0,5 Gew.-% mindestens eines nicht-ionischen Netzmittels,
G) 0 bis 0,5 Gew.-% mindestens eines Konservierungsmittels,
H) 0 bis 3 Gew.-% mindestens eines mineralischen Füllstoffes und
I) 0 bis 5 Gew.-% an Polyvinylacetat in Form eines Redispersionspulvers.
Unter einer "Tapete" ist papierhaltiger Wandbelag zu verstehen.

Eine Tapete, die bei Kontakt mit, Wasser dimensionsstabil ist, darf eine maximale Dimensionsänderung im feuchten Zustand von bis zu +/- 0,4 mm pro 10 cm nach der bei den Beispielen angegebenen Meßmethode haben. Bevorzugt sind dimensionsstabile Tapeten mit einem Gehalt an Fasern, sei es dass sie als separate Schicht neben mindestens einer Papierschicht vorliegen oder in die Papierschicht integriert sind.

Unter einer "Vliestapete" wird eine Materialkombination eines Polyester-, Polyethylen oder Polypropylen-Wirrvlieses (sog Non-Woven) mit einer Schicht aus

Papier, insbesondere einer Oberschicht aus Papier verstanden. Sie zeichnen sich durch ein hohes Maß an Dimensionsstabilität, Nassreißfestigkeit und restlos trockener Abziehbarkeit aus und sind natürlich gut überstreichbar. Bevorzugt sind Tapeten mit einer so hohen Reißfestigkeit, dass sie auch nach der Trocknung vollständig abziehbar sind, sich also trocken abziehen lassen ohne Papierrückstände. In der Regel bleibt der Klebstoff auf dem Untergrund zurück.

Die einfachste Form dieser Vliestapeten ist einlagig aufgebaut und besteht bei einem Gewicht bis zu etwa 160 g/m² aus einem verfestigten Verbund aus Cellulose- und Textilfasern, z.B. einem PP/PE-Wirrvlies. Durch Prägen lässt sich die Sichtseite der Vliestapeten auch profiliert gestalten. Diese Vliestapeten zeichnen sich dadurch aus, dass sie auch im eingekleisterten Zustand formstabil und reißfest sind, da der Faserverbund nur wenig Feuchtigkeit aufnimmt. Ein weiterer Vorteil der Vliestapeten besteht darin, dass sie trocken rückstandslos vom Untergrund abziehbar sind. Die Vliestapeten weisen jedoch den Nachteil auf, dass der Vliesstoff in der Herstellung sehr teuer ist, wodurch der Preis bei einem Gewicht von bis zu 160 g/m² ein Vielfaches einer vergleichbaren Papiertapete beträgt.

Neben diesen reinen Vliestapeten sind auch Vliestapeten bekannt, die eine dünne Vlies-Trägerschicht aufweisen, auf die aus geschäumtem PVC oder aus einem Acrylschaum eine strukturierte Oberschicht aufgetragen ist. Zwar könnten durch die Verwendung einer dünnen Vliesschicht die Herstellungskosten gesenkt werden, jedoch weist die dünnere Vliesschicht den Nachteil auf, dass das Vliesmaterial leicht durchscheinend ist, so dass es eines farblich neutralen Untergrunds und/oder einer eingefärbten PVC- bzw. Acryl-Schicht oder eines Überstreichens der PVC-Schicht bedarf, um ein Durchscheinen des Untergrunds zu vermeiden.

Zu den Vliestapeten soll auch gezählt werden eine Tapete die mindestens zwei miteinander verbundene Materiallagen, nämlich einer auf dem zu tapezierenden Untergrund anliegenden Lage aus einem Trägermaterial und einer die Sichtseite bildenden Lage aus einem Obermaterial, wobei das Trägermaterial ein reißfester Verbundstoff aus langfaserigen Fasern ist, die chemisch, insbesondere durch Verkleben oder Verschweißen, verfestigt sind und das Obermaterial aus Papier besteht (siehe DE 20113109 U1). Konkrete Angaben zu der Trägerschicht sowie zu dem Obermaterial sowie zur Herstellung dieser Vliestapete sind diesem Dokument zu entnehmen. Von einer Klebstoff-beschichteten Tapete ist jedoch keine Rede. Bevorzugt sind also derartige Tapeten, bei denen mindestens eine Papierschicht auf einem Vlies aus synthetischen Fasern als Trägermaterial kaschiert ist. Unter Umständen kann es zweckmäßig sein, wenn das Trägermaterial ein voluminöses Faservlies ist, z.B. wenn es auf eine Wärmedämmung ankommt. Ein Maß für das Volumen ist das Wasseraufnahmevermögen. Dieses wird durch das Verfahren nach Cobb bestimmt (DIN 20535). Die Tapeten können auch für andere spezielle Zwecke konstruiert sein, z.B. zur Abschirmung von elektromagnetischen Feldern.

Die Tapete ist auf der Rückseite mit einem "Klebstoff beschichtet". Sie hat also eine festhaftende, zusammenhängende mehr oder weniger kompakte Schicht aus einem Klebstoff, insbesondere einem Kleister.

Die Klebstoffschicht hat ein Flächengewicht von 5 bis 30 g Klebstoff pro m², vorzugsweise von 10 bis 20 g/m². Die Auftragsmenge ist im konkreten Fall den spezifischen Gegebenheiten der jeweiligen Tapete im Hinblick auf Grammatur, Rollenspannung und/oder Prägung anzupassen, um eine sichere Verlegung und einen zuverlässigen Sitz auf dem Untergrund bis zur gewollten Wiederablösung gewährleisten zu können.

Die Klebstoffschicht weist vorzugsweise ein Dickenprofil auf, wobei die Ränder in einer Breite von ca. 2 bis ca. 10 cm, vorzugsweise von ca. 2,5 bis ca. 5 cm ca. 1,5fach, insbesondere ca. 1,2fach dicker als die Mitte sind. Damit wird erreicht, dass im späteren Nahtbereich eine höhere Durchschnittsmenge an Klebstoff resultiert als im Mittelteil der Tapete, um den verlegetechnischen Anforderungen in besonderer Weise gerecht zu werden. Der höhere Auftrag im Nahtbereich darf allerdings nicht zur Folge habe, dass durch ein Überangebot an Klebstoff Nachteile in bezug auf Naht, Penetration oder Anschmutzung resultieren.

Die Klebstoffschicht erfüllt sehr spezifische und einander zum Teil widersprechende Anforderungen bei ihrer Herstellung, bei der Lagerung der Tapete, beim Tapezieren sowie beim Entfernen der Tapete. Je nach Art und Verwendung der Tapete sind folgende Eigenschaften von mehr oder weniger großer Bedeutung: So sollte die Klebstoffbeschichtung die übliche Produktionsgeschwindigkeit der kontinuierlichen Tapetenfertigung möglichst ebensowenig beeinträchtigen wie die Rollen-Konfektionierung. Ferner sollte die Klebstoffschicht abriebfest sein und den normalen Tapetentransport ohne Schaden überstehen. Eine geringe Blockneigung im aufgerollten Zustand ist ebenfalls wichtig: Auf keinen Fall sollte die Klebstoffschicht bei der Lagerung im trockenen Zustand klebrig werden. In dem in den Beispielen angegebenen Blocktest sollten die Beurteilungen zumindest 4 sein, möglichst 1. Im Gegensatz dazu sollte sie aber sehr schnell klebrig werden bei ihrer Aktivierung durch Kontakt mit Wasser, was eine hohe Aufschlussgeschwindigkeit, ein hohes Quellvolumen, eine ausreichend hohe Anfangshaftung bedeuten. Natürlich muss die Klebstoffschicht ausreichend waschresistent sein und eine ausreichend lange offene Zeit für die Verarbeitung ermöglichen. Außerdem sollte der aktivierte Klebstoff eine hohe Feuchtfestigkeit, eine möglichst geringe Neigung zur Fleckenbildung sowie ein relativ kurz abreißendes Fließverhalten aufweisen. Die Trockenklebkraft muss schließlich ausreichend hoch sein, darf aber die Abziehbarkeit nicht ungünstig beeinflussen.

Diese Eigenschaften der Klebstoffschicht werden in hohem Maße erfindungsgemäß durch die Art und die Menge der Klebstoffkomponenten erzielt.

Unter "Stärke- oder Celluloseethern" werden Stärke- oder Cellulosederivate verstanden, die durch partielle oder vollständige Substitution von Wasserstoffatomen der Hydroxygruppen der Stärke oder Cellulose durch Alkyl- und/oder (Ar)alkylGruppen hergestellt werden. Die Alkyl- und/oder (Ar)alkyl-Gruppen tragen vorzugsweise zusätzlich nichtionische, anionische oder kationische Gruppen. Dabei sind die Einzelmoleküle in der Regel unterschiedlich substituiert, so dass ihr Substitutionsgrad ein Mittelwert ist. Außerdem kann die Substitution auch an während der Reaktion entstehenden "neuen" Hydroxylgruppen einsetzen, was z.B. beim Reaktionspartner Epoxid der Fall ist. Die im Rahmen der vorliegenden Erfindung eingesetzten wasserlöslichen Stärke- oder Celluloseether tragen jedoch mindestens eine OH-Gruppe.

Die Veretherung der Stärke oder Cellulose wird im allgemeinen durch Einwirkung von (Ar)alkylhalogeniden, beispielsweise Methyl-, Ethyl- und/oder Benzylchlorid, 2-Chlorethyldiethylamin oder Chloressigsäure, und/oder Epoxiden, z.B. Ethylen-, Propylen- und/oder Butylenoxid, Glycidyltrimethylammoniumchlorid, und/oder aktiviertem Olefin, beispielsweise Acrylnitril, Acrylamid oder Vinylsulfonsäure, auf mit Basen, meist mit wäßriger Natronlauge, aktivierter Cellulose durchgeführt.

Im Rahmen der vorliegenden Erfindung umfasst der Begriff "wasserlöslich" solche Verbindungen, die sich in Wasser molekulardispers oder kolloidal lösen. Im Rahmen einer bevorzugten Ausführungsform betrifft der Begriff "wasserlöslich" solche Verbindungen, die eine Löslichkeit von mehr als mindestens 0,01 g, bezogen auf 100 ml Wasser von 20°C, aufweisen. Vorzugsweise liegt die Löslichkeit von wasserlöslichen Verbindungen jedoch oberhalb dieses Wertes, beispielsweise bei 0,1 g oder 0,5 g oder 1 g, bezogen auf 100 ml Wasser von 20°C. Die für die Wasserlöslichkeit genannten Werte müssen nicht sofort nach Einbringen des entsprechenden Stoffs in Wasser erreicht werden. Es kann beispielsweise ausreichend sein, wenn die entsprechenden Werte nach einem Zeitraum von etwa 10 oder etwa 20 Minuten oder mehr erreicht werden.

Der Begriff "wasserdispergierbar" umfaßt im Rahmen des vorliegenden Textes Verbindungen, die in Wasser keine monokulardisperse oder kolloidale Lösung ergeben, sondern sich als disperse Phase im Wasser verteilen.

Die im Rahmen der vorliegenden Erfindung als Bestandteil der Klebstoffschicht eingesetzten Stärke- und Celluloseether liegen vor der Herstellung der Klebstoffschicht in Teilchenform vor. Der Begriff "teilchenförmig" betrifft dabei den tatsächlich innerhalb der Bindemittelzusammensetzung herrschenden Teilchenzustand der etablierten Polysaccharide. Es ist dabei im Rahmen der vorliegenden Erfindung möglich, dass ein Polysaccharidteilchen, wie es im Rahmen der vorliegenden Erfindung als "teilchenförmig" bezeichnet wird, ein Agglomerat aus verschiedenen Partikeln mit einer Partikelgröße, die unterhalb der Teilchengröße liegt, besteht (beispielweise Primärpartikel). Der Begriff "teilchenförmig", wie er im Rahmen des nachfolgenden Textes benutzt wird, bezieht sich auf innerhalb der Bindemittelzusammensetzung vorliegende Teilchen, wie sie durch übliche Methoden zur Klassifizierung von Teilchengrößen, beispielsweise durch Siebverfahren, elektronenmikroskopische Verfahren oder Lichtstreuung, ohne weitere Zerkleinerung messbar sind. Es ist dabei unerheblich, ob ein in einem erfindungsgemäßen Bindemittel vorliegendes Teilchen als Agglomerat aus Primärpartikeln vorliegt oder das Teilchen selbst ein Primärpartikel ist.

Im Rahmen einer bevorzugten Ausführungsform der vorliegenden Erfindung weisen die Stärke- und Celluloseether-Teilchen eine Teilchengrößen- Zusammensetzung auf, bei der höchstens 8 Gew.-%, vorzugsweise jedoch weniger als 8 Gew.-% der Teilchen eine Größe von mehr als 200 µm aufweisen. Vorzugsweise weisen etwa 40 bis 95 Gew.-%, insbesondere etwa 60 bis etwa 90 Gew.-% oder etwa 75 bis etwa 85 Gew.-% der Stärke- und Cellulose-Teilchen eine Teilchengröße von etwa 0,1 µm auf.

Als "Celluloseether" eignen sich folgende Typen: Carboxymethylcellulose (CMC), Carboxymethylmethylcellulose (CMMC), Ethylcellulose (EC), Hydroxyethylcellulose (HBC), Hydroxybutylmethylcellulose (HBMC), Hydroxyethylcellulose (HEC), Hydroxyethylcarboxymethylcellulose (HECMC) Hydroxyethylethylcellulose (HEEC), Hydroxypropylcellulose (HPC), Hydroxypropylcarboxymethylcellulose (HPCMC), Hydroxypropylmethylcellulose (HPMC), Hydroxyethylethylcellulose (HEMC) Methylhydroxyethylcellulose (MHEC), Hydroxyethylmethylcellulose (HEMC) Methylhydroxyethylcellulose (MHEC), Methylcellulose (MC) und Propylcellulose (PC), wobei Carboxymethylcellulose, Methylcellulose, Methylhydroxyethylcellulose oder Methylhydroxypropylcellulose sowie die Alkalisalze der Carboxymethylcellulose sowie gegebenenfalls alkoxylierte, insbesondere ethoxylierte Methylcellulose bevorzugt sind.

Bevorzugte Celluloseether sind: Methyl-, Methylhydroxypropyl- und Methylhydroxyethylcellulose. Sie haben einen Veretherungsgrad, der in 2 %iger wäßriger Lösung bei 20 °C eine Viskosität (Brookfield, RVT, Spindel 4 bis 6) von 0,200 bis 30 mPas ergibt, vorzugsweise 5 bis 10 Pas.

Unter einem "retardierten" Celluloseether wird im Rahmen der vorliegenden Erfindung ein Celluloseether verstanden, der zur Einstellung seiner Löslichkeit in Wasser oder wässrigen Lösungen einer Oberflächen behandlung, insbesondere einer oberflächlichen Vernetzung unterzogen wurde. Ein "retardierter" Celluloseether, wie er im Rahmen der vorliegenden Erfindung eingesetzt wird, weist gegenüber demselben Celluloseether in nicht-retardierter Form eine verzögerte Löslichkeit auf, d. h., bis zu seiner Auflösung in Wasser oder einer wässrigen Lösung vergeht eine größere Zeitspanne als bei einem entsprechenden nicht-retardierten Celluloseether.

Die Wasserlöslichkeit der im Rahmen der vorliegenden Erfindung zur Herstellung der erfindungsgemäß eingesetzten retardierten Celluloseether beträgt in der Regel wenigstens etwa 0,5 Gewichtsteile pro 100 Gewichtsteile Wasser. Vorzugsweise liegt die Wasserlöslichkeit jedoch bei mindestens etwa 0,5 Gewichtsteilen pro 30 Gewichtsteilen Wasser.

Zur Herstellung von teilvernetzten wasserlöslichen Stärke oder Cellulosethern wird ein wasserlöslicher Celluloseether mit Glyoxal und/oder mit Polyglyoxal in Kontakt gebracht.

Zur Durchführung dieser Reaktion werden vorzugsweise wässrige Lösungen von Glyoxal oder Polyglyoxal eingesetzt. Im Rahmen einer bevorzugten Ausführungsform der Erfindung werden wäßrige Glyoxallösungen eingesetzt, die einen Gehalt von etwa 0,1 bis etwa 60 Gew.-%, beispielsweise etwa 2 bis etwa 50 Gew.-% an Glyoxal aufweisen. Besonders geeignet sind beispielsweise Glyoxallösungen, die einen Glyoxalgehalt von etwa 20 bis 45, insbesondere etwa 30 bis 40 Gew.-% aufweisen. Werden zur Herstellung der erfindungsgemäß einsetzbaren Celluloseether wässrige Lösungen von Polyglyoxal eingesetzt, so weisen diese vorzugsweise einen Gehalt an Polyglyoxal von etwa 70 bis etwa 90 Gew.-% auf. Vorzugsweise wird die im Handel erhältliche (Highlink 80, Hersteller: Tromsal), etwa 80 Gew.-%ige Form eingesetzt. Es ist ebenfalls möglich, Glyoxal und Polyglyoxal zusammen, d. h., gleichzeitig oder nacheinander zur Herstellung der retardierten Celluloseether einzusetzen.

Glyoxal und/oder Polyglyoxal werden, bezogen auf den wasserlöslichen Celluloseether, in der Regel in einem Anteil von etwa 0,05 bis etwa 8 Gew.-%, vorzugsweise etwa 0,1 bis etwa 5 Gew.-% und besonders bevorzugt in einem Anteil von etwa 0,5 bis etwa 3 Gew.-% eingesetzt. So kann das Polyglyoxal beispielsweise in einer Menge von > 1 Gew.-%, insbesondere in einer Menge von etwa 1,3 bis etwa 1,9 oder etwa 1,45 bis etwa 1,75 Gew.-%, bezogen auf wasserlöslichen Celluloseether, eingesetzt werden.

Der wasserlösliche Celluloseether oder das Gemisch aus zwei oder mehr solcher Celluloseether sollte zur Durchführung der Retardierungsreaktion bevorzugt in trockener Form vorliegen, d.h. mit einem Wassergehalt von höchstens etwa 15 Gew.-%, vorzugsweise höchstens etwa 10 Gew.-%. Die zur Behandlung vorgesehenen Celluloseether können dabei beispielsweise Wassergehalte von etwa 5 bis etwa 15 Gew.-%, oder etwa 6 bis etwa 9 Gew.-% aufweisen. Ebenso möglich ist im Rahmen des Retardierungsverfahrens der Einsatz von feuchten, d.h. wasserhaltigen Celluloseethern, wie sie als Rohprodukte aus der Celluloseveretherung erhältlich sind. Die feuchten Celluloseether weisen in der Regel einen Wassergehalt von mehr als etwa 15 Gew.-% bis etwa 70 Gew.-%, vorzugsweise etwa 20 bis etwa 40 Gew.-% auf. Die zur Behandlung vorgesehenen Celluloseether können beispielsweise in Pulverform eingesetzt werden. Die Celluloseether können dabei beispielsweise granular oder in Pulverform vorliegen. Werden pulverförmige Celluloseether eingesetzt, so weisen diese beispielsweise zu etwa 60 %, besonders bevorzugt zu etwa 70 % und insbesondere bevorzugt zu etwa 80 % eine Teilchengröße von weniger als etwa 0,2 mm, bevorzugt weniger als etwa 0,125 mm und besonders bevorzugt weniger als etwa 0,1 mm (bestimmt nach DIN 4188) auf.

Das Kontaktieren des wasserlöslichen Celluloseethers oder des Gemischs aus zwei oder mehr wasserlöslichen Celluloseethern mit Glyoxal oder mit Polyglyoxal oder deren Gemisch kann auf beliebige Weise erfolgen. Wird ein feuchter Celluloseether oder ein Gemisch aus zwei oder mehr feuchten Celluloseethern eingesetzt, so kann eine wässrige Glyoxallösung beispielsweise durch Aufsprühen, Zutropfen oder jede geeignete andere Zugabeart zum Celluloseether oder zum Gemisch aus zwei oder mehr Celluloseethern erfolgen. Es ist ebenfalls möglich, eine wässrige Lösung von Glyoxal oder Polyglyoxal oder deren Gemisch und den wasserlöslichen Celluloseether oder das Gemisch aus zwei oder mehr wasserlöslichen Celluloseethern in einer Knetvorrichtung, beispielsweise in einem Extruder, zu vermischen. Auch jede andere Mischvorrichtung ist geeignet, beispielsweise Rotor-Stator Mischvorrichtungen.

Zur Herstellung der erfindungsgemäß einsetzbaren retardierten Celluloseether kann die Retardierungsreaktion bei Umgebungstemperatur, d. h. bei einer Temperatur von etwa 10 bis etwa 30°C durchgeführt werden. Es ist jedoch ebenfalls möglich, die Retardierungsreaktion bei einer höheren Temperaturen durchzuführen, beispielsweise bei einer Temperatur von etwa 30 bis etwa 60°C. Gegebenenfalls kann die Retardierungsreaktion auch bei noch höheren Temperaturen durchgeführt werden, beispielsweise bei etwa 60 bis etwa 100°C bzw. dem Siedepunkt der eingesetzten Glyoxal- oder Glyoxallösung, falls eine solche verwendet wird.

Im Anschluss an die hier beschriebene Retardierungsreaktion kann der Celluloseether oder das Gemisch aus zwei oder mehr Celluloseethern und Glyoxal und/oder Polyglyoxal gelagert werden. Eine solche Lagerung kann beispielsweise in einem Behälter durchgeführt werden, der bereits zur Durchführung der Retardierungsreaktion eingesetzt wurde. Die im Rahmen der Retardierungsreaktion behandelten Gemische können während der Lagerung einer weiteren Vermischung unterzogen werden, beispielsweise durch Lagerung in einem entsprechenden Mischgerät, beispielsweise einem beheizten Pflugscharmischer oder einer beheizten rotierenden Trommel. Die Lagerung wird vorzugsweise bei einer Temperatur von mindestens etwa 70°C durchgeführt. Im Rahmen einer weiteren bevorzugten Ausführungsform der vorliegenden Erfindung liegt die Temperatur während der Lagerung jedoch höher, beispielsweise bei mindestens etwa 75 oder mindestens etwa 80 °C. Es hat sich gezeigt, das die Lagerung auch bei noch höheren Temperaturen, beispielsweise bei 85, 90, 95 oder sogar 100 °C durchgeführt werden kann. Die Obergrenze für die bei der Durchführung der Lagerung herrschende Temperatur stellt in der Regel der Siedepunkt des im Gemisch vorliegenden Wasseranteils bzw. der wäßrigen Lösung von Glyoxal und/oder Polyglyoxal dar.

Die teilchenförmigen retardierten Celluloseether oder das Gemisch aus zwei oder mehr teilchenförmigen retardierten Celluloseethern weisen ein Lösungsverhalten in Wasser oder wässrigen Lösungen auf, bei dem nach höchstens etwa 60 Minuten, insbesondere jedoch nach 30 Minuten oder weniger, beispielsweise nach weniger als etwa 20, 15 oder 10 Minuten mindestens etwa 40 % der maximalen Viskosität, d.h., der Viskosität, wie sie sich beispielsweise bei einer entsprechenden Lösung nach etwa 3 bis etwa 10 Stunden einstellt, erreicht werden. Vorzugsweise erreichen die erfindungsgemäß eingesetzten retardierten Celluloseether-Teilchen nach etwa 5 bis etwa 10 Minuten mindestens etwa 50 % der maximalen Viskosität, vorzugsweise mindestens etwa 60 Prozent.

Die Celluloseether sind typische Kleisterrohstoffe und werden in den hier betrachteten Klebstoffzubereitungen insbesondere wegen ihrer hohen Wasserretention, ihrem Beitrag zu Anfangshaftung und zur Endfestigkeit und insbesondere zur Steuerung der offenen Zeit und einer ausreichenden Verschiebbarkeit eingesetzt. Es wird ein bimodales Gemisch verschiedener Mahlgrade, z.B. 2 und 5 eingesetzt, um einerseits im feinteiligen Bereich sofortige Wasseraufnahme und schnellen Aufschluss bei gleichzeitiger "Entretardierung" zu realisieren, und um andererseits bei grobkörnigen Partikeln im aufgequollenen Zustand ein Art von Kugellagereffekt zu gewährleisten, um den Wandbelag beim Tapezieren gut und problemlos in die gewünschte Endposition zu verschieben und die Nähte korrekt zu schließen. Zur Erläuterung weiterer Details zu den Eigenschaften der Celluloseether wird auf die einschlägige Fachliteratur verwiesen, insbesondere auf das Buch "Polysaccharid-Eigenschaften und Nutzung" eine Einführung von Burchard.

Carboxymethylcellulose (CMC) in gemahlendem Zustand stellt ebenfalls einen wichtigen Rückseitenbeschichtungsrohstoff dar und ist heute Stand der Technik. Infrage kommen ausschließlich sehr schnell aufschließende Typen, wie sie von verschiedenen Herstellern verfügbar sind. Nachteilig ist die zumeist sehr leimige Struktur von in Wasser aufgeschlossener CMC und die große Abhängigkeit des Aufschlusses von der Härte des eingesetzten Wassers, was die Einsatzmenge in Vorbeschichtungsformulierungen á priori deutlich begrenzt.

Beispiele für im Handel erhältliche Celluloseether sind: Natrosol- und Blanose-Typen der Fa. Hercules.

Unter einem pH-Regulator ist ein Stoff zu verstehen, der durch sein Auflösen in Wasser gezielt dessen pH-Wert verändert. Im vorliegenden Fall muss sich ein pH-Wert von mehr als 8 einstellen und bevorzugt im Bereich von 9,5 bis 11,5 liegen.

Hierzu zählen beispielsweise die wasserlöslichen, vorzugsweise pulverförmigen Alkalimetallsilikate (Wasserglas), insbesondere Na- oder K-Wasserglas, sowie die Alkalisalze der Kohlensäure oder der Carbonsäuren oder der tertiären Phosphate. Ein besonders bevorzugter pH-Regulator ist die Carboxymethylstärke, speziell von Kartoffel-, Mais-, Weizen-, Reis- und/oder Tapiokastärke in ebenfalls in auf Nativkorngröße gemahlenem Zustand. Sie liefert Beiträge zur rheologischen Einstellung des Klebstoffes im aufgequollenen Zustand und hebt durch ihre alkalische Einstellung im wäßrigen Medium die Retardierung der Celluloseether spontan auf. Der Carboxylierungsgrad (DS) liegt zweckmäßigerweise im Bereich von 0,1 bis 1,0, insbesondere im Bereich von 0,25 bis 0,5. Geeignete Handelsprodukte sind: Solvitose C5 der Fa. AVEBE, insbesondere Emcol UK der Fa. Emlichheim.

Die pH-Regulatoren können alleine oder als Gemisch aus zwei oder mehr davon eingesetzt werden. Wenn im Rahmen der Auflösung der erfindungsgemäßen wasserlöslichen Zubereitungen eine Alkalisierung erfolgen soll, dann beträgt der Anteil der obengenannten Zusatzstoffe an der gesamten erfindungsgemäßen Bindemittelzubereitung im allgemeinen etwa 0,1 bis etwa 5 Gew.-%, insbesondere 2 bis 3 Gew.-%. Entscheidend für die Zusatzmenge ist der angestrebte pH-Wert. Er sollte mehr als 8, insbesondere 9,5 bis 11,5 betragen.

Unter einem Sprengmittel wird ein Stoff oder ein Stoffgemisch verstanden, welcher bei Kontakt mit Wasser eine Volumenarbeit ergibt. In die Volumenarbeit geht die Volumenzunahme sowie der Quelldruck ein. Von besonderer Bedeutung scheint die Sog- oder Kapillar-Wirkung zu sein. Deswegen sind faserige Sprengmittel bevorzugt, z.B.
- technische Cellulosefasern wie Arbocell FT 600 der Firma JRS Rettenmaier oder
- granulierte, nicht hochumgesetzte Celluloseether mit hohem Fasergehalt wie Culminal MC 3000 der Firma Hercules oder
- gemahlene, nicht hochumgesetzte Celluloseether mit hohem Fasergehalt wie Culminal MC 3000 der Firma Hercules oder
- granulierte, hochumgesetzte Celluloseether mit niedrigem Fasergehalt wie Tylose MH 15005 PG der Firma Clariant.

Aber auch nicht-faserige Sprengmittel können wirksam sein wie Guar oder Stärkeprodukte (z.B. Kelzan D der Firma Kelco oder Solvitose H 4 der Firma AVEBE) und vor allem Polyvinylpyrrolidon (z.B. Disintex 75 der Firma ISL).

Das Sprengmittel sollte in einer Menge von 0,5 bis 15, insbesondere 1 bis 10 und vor allem 3 bis 5 Gew.-% in der Klebstoffschicht enthalten sein.

Quellstärken (QS) - vorzugsweise auf Basis von Kartoffel-, Mais- und/oder Tapiokastärke - stellen zweckmäßigerweise mengenmäßig den Hauptbestandteil der Klebstoffvorbeschichtung. Man erhält "feingemahlene Quellstärke", indem man thermisch aufgeschlossene Stärke mahlt. Geeignete Quellstärke zeichnet sich durch einen sehr schnellen Aufschluss, ein großes Quellvolumen und eine hohe Trockenklebkraft aus. Aufgeschlossene Quellstärke der genannten Provenienz zeigt die gewünschte "kurze" Struktur, d.h. ihre Lösung zieht keine Fäden. Eingesetzt wird die Quellstärke in Pulverform, vorzugsweise in der Nativkornstruktur der Ausgangsstärke. Ein geeignetes Handelsprodukt ist Weizenquellstärke Type 90 von der Fa. Crespel & Deiters.

Als Dispergiermittel bzw. Netzmittel und/oder Tenside sind nichtionische Tenside geeignet. Typische Beispiele für derartige nichtionische Tenside sind Fettalkoholpolyglykolether, Alkylphenolpolyglykolether, Fettsäurepolyglykolester, Fettsäureamidpolygylkolether, Fettaminpolyglykolether, alkoxylierte Triglyzeride, Alk(en)yloligoglucoside, Fettsäure-N-alkylglucamide, Proteinhydrolysate (insbesondere pflanzliche Produkte auf Sojabasis) Polyolfettsäureester, Zuckerester, Sorbitanester und Polysorbate. Sofern die nichtionischen Tenside Polyglycoletherketten enthalten, können sie eine konventionelle, vorzugsweise jedoch eine eingeengte Homologenverteilung aufweisen. Vorzugsweise enthalten die Klebstoffschichten Mittel als weitere Komponente nichtionische Tenside wie beispielsweise Anlagerungsprodukte von durchschnittlich 15 bis 30 Mol Ethylenoxid an Fettalkohole mit 8 bis 18 Kohlenstoffatomen.

Die Klebstoffschicht kann auch Füllstoffe enthalten. Geeignete mineralische Füllstoffe sind beispielsweise Carbonate (insbesondere Calciumcarbonat), Silikate (beispielsweise Talk, Ton, Glimmer), Kieselerde, Sulfate wie Calcium- oder Bariumsulfat, Aluminiumhydroxid sowie Glasfasern oder Glaskugeln. Derartige Füllstoffe können in der erfindungsgemäßen wasserlöslichen Zusammensetzung beispielsweise in einer Menge von bis zu etwa 3, vorzugsweise von etwa 0,1 bis etwa 3 Gew.-%, bezogen auf die gesamte Klebstoffschicht, enthalten sein.

Als organischer Füllstoff kommt gemahlene unmodifizierte Cellulose (= Cellulosepulver) zur Erzielung einer guten Spaltüberbrückung zwischen Vliestapete und Untergrund (= Cellulosepulver) in Frage. Ebenfalls geeignet sind Cellulosefasern.

Ihr Anteil kann bis zu 10 Gew.-%, insbesondere bis zu 3 Gew..-% betragen, bezogen auf die gesamte Klebstoffschicht.

Als Konservierungsmittel eignen sich beispielsweise quaternäre Ammoniumverbindungen, Aldehyde, vorzugsweise Formaldehyd, Isothiazolone oder Benzisothiazolone oder Gemische aus zwei oder mehr davon.

Als Farbstoffe und Pigmente sind bevorzugt Weiß-Pigmente geeignet, beispielsweise Kreide, Rutil und TiO₂.

Weiterhin können redispergierbare Dispersionspulver von Polymerisaten eingesetzt werden. Hierbei handelt es sich beispielsweise um die Homo- oder Copolymerisate der Vinylester, von Styrol, Acrylsäure- oder Methacrylsäureestern oder von Vinylchlorid. Geeignete Vinylesterpolymerisate sind beispielsweise Vinylacetat-Homopolymere, Copolymere des Vinylacetats mit Ethylen oder Vinylchlorid oder weiteren Vinylestern wie Vinyllaurat, Versaticsäurevinylester, Vinylpivalat oder Ester von Maleinsäure oder Fumarsäure oder Homopolymerisate von Vinylestern von gesättigten C₃- bis C₈-Alkylcarbonsäuren oder deren Copolymerisate mit Ethylen, Vinylchlorid oder weiteren Vinylestern, oder Copolymerisate, die ein Gemisch aus zwei oder mehr der genannten Monomeren aufweisen oder Gemische aus zwei oder mehr der genannten Homo- oder Copolymerisate. Im Rahmen einer bevorzugten

Ausführungsform der Erfindung werden als Redispersionspulver Homopolymere des Vinylacetats, Vinylacetat-Ethylen-Copolymere oder Copolymere von Vinylestern von gesättigten C₃- bis C₈-Alkylcarbonsäuren und Ethylen mit einem Ethylengehalt von 1 bis etwa 40 Gew.-% und 0 bis etwa 40 Gew.-% weiterer Vinylester aus der Gruppe der Vinylester von gesättigten C₃- bis C₈-Alkylcarbonsäuren oder Vinylchlorid, Copolymere von Styrol und Estern der Acrylsäure oder Methacrylsäure wie Styrol-Butylacrylat- oder Styrol-Ethylhexylacrylat-Copolymere mit einem Styrolgehalt von 1 bis etwa 70 Gew.-%. Insbesondere werden Polyvinylacetate als Redispersionspulver eingesetzt, und zwar in geringen Mengen. Es steuert nicht nur die gewünschte Feuchtfestigkeit etwa beim Überstreichen der Vliestapete, sondern liefert je nach Schwere der Tapete auch Beiträge zum Aufbau einer ausreichend hohen Endfestigkeit.

Derartige redispergierbare Polymerisate werden beispielsweise durch Sprühtrocknung von Polymerdispersionen in Sprühtürmen hergestellt.

Die Klebstoffschicht kann noch weitere wasserlösliche oder wasserdispergierbare polymere Bindemittel enthalten, z.B. Polyvinylacetat, Polyvinylalkohol und Polyacrylamid. Diese Bindemittel dienen vor allem dazu, die Kleister-typischen Komponenten, die in Form von Pulver auf die Tapetenrückseite aufgetragen wurden, zu einem zusammenhängenden Film zu verbinden.

Das Polyvinylacetat wird in Form einer Dispersion auf Basis nichtionischer und/oder Celluloseether-haltiger Schutzkolloide mit einem Festkörpergehalt von 30 bis 60, vorzugsweise 40 bis 55 % eingesetzt. Sie dient einerseits zum Ausbilden eines Haftungsfilms zur Aufbringung einer pulverförmigen Rückseitenbeschichtung und wird mit einem der üblichen Auftragsverfahren auf dem Vliestapetenrücken appliziert und andererseits auch zur finalen Benetzung des ausgebildeten Klebstofffilms, wobei nach der Trocknung ein blockfreier, die Spannung der Rollenwicklung widerstehender Finish erreicht wird. Die PVAc-Dispersion zur Einbettung der pulverförmigen Klebstoffpartikel kann zusätzlich. Weißpigmente, vorzugsweise Titandioxid, enthalten, welches sich positiv auf die tendenziell hohe Transparenz der Vliestapete auswirkt, und die optische Überdeckung von Unregelmäßigkeiten des

Untergrundes positiv beeinflusst. Die eingesetzte Dispersion ist auch geeignet, den inneren Zusammenhalt des Vliestapetenaufbaus durch Penetration in die gesamte Tapetenstruktur nach der Trocknung zu festigen und gegebenenfalls eine nachfolgende Prägung formstabil zu unterstützen. Nur solche Dispersionen kommen für den erfindungsgemäßen Einsatz in Frage, die ausreichend reemulgierbar sind, um bei Kontakt mit Wasser den gesamten Klebstofffilm spontan aufzuschließen und die gewünschte Wasseraufnahme von ca. 100 bis 200 g/m² innerhalb von Bruchteilen einer Sekunde zu bewerkstelligen. Die Trockenfilme müssen zudem eine ausreichende Biegeflexibilität aufweisen, um die Rollenspannung sicher aushalten zu können, ohne sich unter welchen Bedingungen auch immer in fester Form vom Träger zu lösen.

Eine geeignete Dispersion ist z.B. Wormalit PM 971 der Fa. Cordes.

Polyvinylalkohol (PVAI) wird in Pulverform eingesetzt. Er ist in seinem Verseifungsgrad so eingestellt, dass eine schnelle Wasseraufnahme bzw. Quellfähigkeit gewährleistet ist. Da PVAI reversibel wasserlöslich oder -quellbar ist, und die Klebstoffkonsistenz eher leimig beeinflusst, ist die Einsatzmenge ebenfalls sehr begrenzt.

Polyacrylamid-Umkehremulsion (PAA) besitzt die Eigenschaft, als Dispersion mit hohem Festkörpergehalt dünnflüssig zu sein, aber bei Verdünnung mit Wasser spontan Lösungen mit hoher Viskosität zu bilden. Derartige Emulsionen sind zur Formulierung und Kleistervorbeschichtungen Stand der Technik. Ihr Einsatz ist im vorliegenden Fall sehr begrenzt, etwa durch abschließendes Besprühen oder Bedrucken der Trockenbeschichtung als blockfreier Finish vor dem Trocknungsvorgang. Geeignete Handelsmarken für PAA sind z.B. HE-Polymer 100 der Fa. Chevron oder Texipol 63-002 der Fa. Scott-Bader.

Die Klebstoffschicht der gebrauchsfertigen erfindungsgemäßen Tapete fühlt sich trocken an. Sie enthält praktisch nur die Gleichgewichtsfeuchtigkeit in einer Menge von bis zu 1, insbesondere bis zu 0,5 g Wasser pro m² bei 20°C und 60 % relativer Luftfeuchte.

Die Herstellung der Klebstoffschicht wird zweckmäßigerweise in den kontinuierlichen Produktionsprozess der Tapete integriert.

In den üblichen Verfahren der Tapetenherstellung wird
a) die Tapetenrückseite angefeuchtet, falls sie nicht ausreichend feucht ist,
b) die angefeuchtete Rückseite mit dem pulverförmigen Klebstoffgemisch bestreut und
c) die pulvrige Klebstoffschicht mit einem wässrigen System besprüht, bevor dann die üblichen Verfahrensschritte folgen wie Trocknung, Schneiden, Drucken usw..

So bietet es sich z.B. bei der Herstellung einer Vliestapete an, die Beschichtung und Trocknung nach dem ersten Herstellungsabschnitt (Kaschieren des doppelbreiten Tapetenrohpapiers mit dem Vlies) vorzunehmen und dann in dem zweiten Herstellungsabschnitt die Tapete zu schneiden, zu bedrucken und zu konfektionieren. Diese Einordnung ergibt sich auch wegen der unterschiedlichen Arbeitsgeschwindigkeiten (60 bis 80 m/Minute einerseits und 120 bis 140 m/Minute andererseits) sowie der unterschiedlichen Breiten (1100 mm einerseits und 550 mm andererseits) bei einem Vergleich der beiden Herstellungsabschnitte. Im Prinzip sollte die zusätzliche Beschichtung und Trocknung die bisherige Verarbeitung weder in der ersten Herstellungshälfte noch in der zweiten Herstellungshälfte behindern. So darf die getrocknete Rückseitenbeschichtung natürlich nicht zu einem Abrieb führen oder zum Blocken neigen.

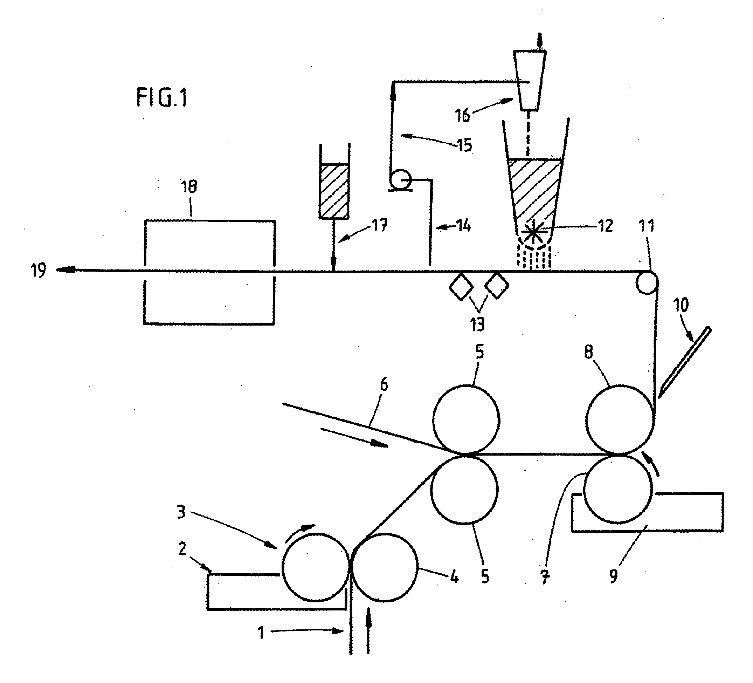

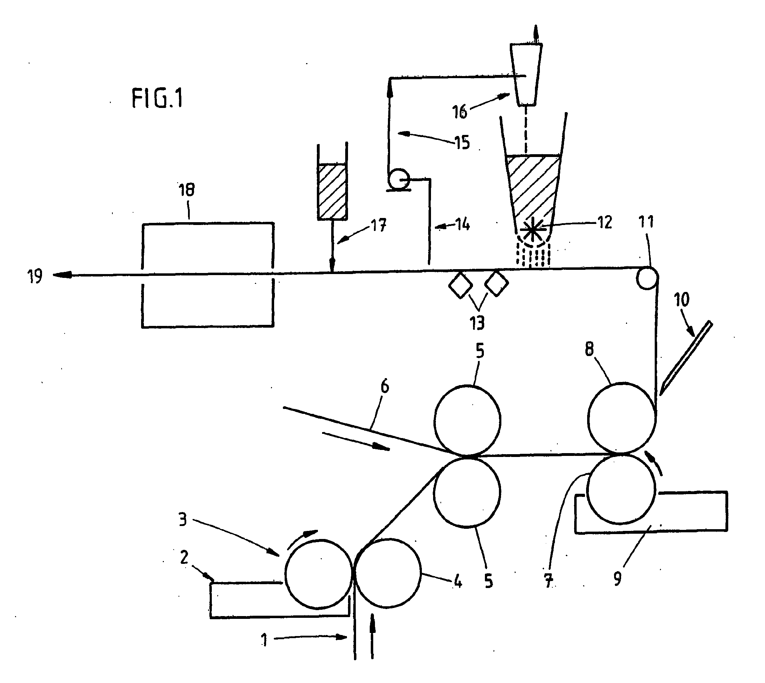

Die Beschichtung soll beispielhaft an einer Vliestapete gemäß der DE 20113109 U1 an Hand der Fig. 1 näher beschrieben werden. Die Fig. 1 ist eine Prinzip-Skizze für eine mögliche Klebstoff-Beschichtungsanlage.

Der erste Herstellungsabschnitt folgt der Lehre der DE 20113109 U1 bezüglich der Kaschierstation. Auf das Vlies 1 wird ein Kaschierklebstoff aus der Klebstoffwanne 2 mit der Auftragsrolle 3 aufgetragen. Das Klebstoff-imprägnierte Vlies wird über die Umlenkrolle 4 zu den Anpresswalzen 5 geführt, wo es mit dem Papierobermaterial 6 verbunden (kaschiert) wird. Wenn die Feuchtigkeit auf der Vliesseite der Papier/Vlies-Kaschierung für die Haftung des Klebstoffpulvers nicht ausreicht, wird mit dem Walzenpaar 7 (vorzugsweise eine Prägewalze) und 8 (Andruckwalze) ein wässriges System aus der Wanne 9 aufgetragen und notfalls mit der Luftbürste 10 egalisiert (Auftrag des wässrigen Systems kann grundsätzlich natürlich auch mit anderen Vorrichtungen erfolgen, z.B. durch Siebdruck, Tiefdruck, Leimdruck, Rakel oder durch Sprühen.). Nach der Umlenkrolle 11 wird möglichst bald nach dem Auftrag des wässrigen Systems die Vliesseite mit dem Klebstoffpulver aus dem Streutrichter 12 mit einem definierten Siebboden und rotierender Bürste bestreut. Das ausgestreute Klebstoffpulver wird mit rotierenden kantigen "Klopfwalzen" 13 tiefer in das Vlies eingebettet. Das nicht eingebettete Klebstoffpulver wird mit der Breitschlitzabsaugung 14 abgesaugt und über eine pneumatische Rückführung 15 zu einem Feststoff-Abscheider geführt, wonach das Klebstoffpulver dem Streutrichter wieder zugeführt wird. Das Klebstoffpulver auf der Papier/Vlies-Kaschierung wird nun noch mit einem wässrigen Bindemittel aus der Bedüsungseinrichtung 17 besprüht, bevor es dann im Trockner 18 getrocknet wird. Nun folgen die üblichen Vorrichtungen der Weiterverarbeitung, z.B. eine Schneidvorrichtung für mittigen Schnitt (19).

Der "Kaschierklebstoff" wird in einer solchen Menge aufgetragen, dass ein inniger Verbund zwischen dem Papierobermaterial 6 und dem Vlies-Trägermaterial 1 erzielt wird. Üblicherweise liegt die Auftragsmenge in der Größenordnung von 30 bis 50 g/m², was bei einem Festkörpergehalt von 45 bis 55 Gew.-% eine Auftragsmenge von ca. 20 g/m² an Kaschierklebstoff ergibt. Als Kaschierklebstoff eignet sich z.B. Wormalit VN 5019 weiß oder VN 5359 unipigmentiert der Fa. Cordes. Der Kaschierklebstoff kann Zusätze enthalten, z.B. Weißpigmente zur Verringerung der Opazität der Tapete.

Das "wäßrige System" dient vor allem der ausreichenden Benetzung des Vlieses, so daß das Klebstoffpulver daran haftet, und zwar insbesondere dann, wenn der Wasserauftrag unmittelbar vor der Pulverbestreuung erfolgt, wobei das Klebstoffgemisch durch sofortiges Anlösen förmlich auf dem Vliesrücken angesintert wird. Darüber hinaus sollte eine wünschenswerte und die Endqualität mitbestimmende Durchdringung der gesamten Tapete erreicht werden. Als wässriges System kommt daher insbesondere eine Polyvinylacetat-Dispersion in Frage, gegebenenfalls mit einem Zusatz einer Polyvinylalkohollösung. Auch hier können Weißpigmente zur Verringerung der Opazität der Tapete zugesetzt werden. Eine typische Rezeptur für das wässrige System zeigt folgende Zusammensetzung:
- 0 bis 60 Gew.-% einer Polyvinylacetatdispersion mit einem Feststoffgehalt von 30 bis 60 Gew.-%, z.B. Vinnapas D 50 der Firma Wacker,
- 0 bis 30 Gew.-% einer Polyvinylalkohollösung (ca. 10%ig in Wasser), z.B. von Mowiol-Typen der Firma Clariant,
- 0 bis 5 Gew.-% an TiO₂ in Pulverform bzw. homogen dispergiert in Wasser,
- 0 bis 0,3 Gew.-% mindestens eines nichtionischen Netzmittels,
- 0 bis 5 Gew.-% eines Celluloseethers, z.B. Culminal MHPC 2000 pr von der Fa. Hercules,
- 0 bis 0,5 Gew.-% an Entschäumer, z.B. Dehydran LF der Fa. Cognis und
- 0,1 bis 1,0 Gew.-% eines Topfkonservierers, z.B. Acticide MBS der Thor Chemie.
- Der Rest ist Wasser.

Demnach kann das wässrige System im einfachsten Fall Wasser sein. Das trifft vor allem dann zu, wenn das rieselfähige Klebstoffpulver sofort beim Auftreffen auf der feuchten Oberfläche des Vliesrückens aktiviert wird und haftet (ansintert). Die Auftragsmenge ist so bemessen, dass je nach Tapetenaufbau ein ausreichend aufnahmefähiger Nassfilm auf dem Vliesrücken resultiert. Im allgemeinen liegt sie bei 20 bis 50 g/m².

Das "Klebstoffpulver" (= Kleister-Pulver) hat folgende Zusammensetzung:
- 60 bis 90 Gew.-% mindestens einer gemahlenen Quellstärke, z.B. Weizenquellstärke Typ 90 von der Fa. Emsland Stärke
- 0,1 bis 15 Gew.-% mindestens eines pH-Regulators für den pH-Bereich von 9,5 bis 11,5, insbesondere gemahlene Carboxymethylstärke, z.B. Solvitose 2426 L1 von der Firma AVEBE,
- 0,1 bis 10 Gew.-% mindestens eines feingemahlenen und retardiert eingestellten Celluloseethers, z.B. Culminal HC 12 000 Pr von der Firma Hercules,
- 0,1 bis 10 Gew.-% mindestens eines feingemahlenen und unretardierten Celluloseethers oder Guars HGP, z.B. Culminal MC 3000 P der Firma Hercules,
- 3 bis 15 Gew.-% mindestens eines Sprengmittels, z.B. Arbocell FT 600 von der Firma Rettenmaier,
- 0 bis 3 Gew.-% mindestens eines mineralischen Füllstoffes, z.B. Omyacarb 10 GU von der Firma Omya,
- 0 bis 0,5 Gew.-% mindestens eines Konservierungsmittels, z.B. Acticide MBS von der Firma Thor-Chemie,
- 0 bis 0,5 Gew.-% mindestens eines nicht-ionogenen Netzmittels, z.B. Dehydran 980 von der Firma Cognis und
- 0 bis 5 Gew.-% mindestens eines Polyvinylacetat-Redispersionspulvers, z.B.

Elotex HM 110 von der Firma Elotex.

Unter "gemahlen" ist ein Mahlgrad von 2 zu verstehen, unter "feinteilig gemahlen" ein Mahlgrad von 5, bestimmt mit dem ALPINE-Luftstrahlsieb.

Eine Besonderheit der vorliegenden Erfindung liegt in der Kombination der eingesetzten Carboxymethylstärke mit dem retardiert eingestellten Celluloseether. Die Carboxymethylstärke hat in der Lösung eine relativ hohe Alkalität von einem pH-Wert zwischen 10 und 11,5. Die Retardierung des Celluloseethers bewirkt, dass er bei Kontakt mit Wasser sehr schnell benetzt, dass aber zunächst die Retardierung behindert, dass oberflächliche Anquellung ein Eindringen von Wasser in den Kern des Einzelpartikels behindert wird. Durch die zeitsynchrone Anlösung der Carboxymethylstärke schlägt der pH-Wert jedoch spontan in den schwach alkalischen Bereich um, was wiederum bewirkt, dass die Retardierung des Celluloseethers augenblicklich aufgehoben wird. Dieser Kunstgriff bewirkt, dass die geforderte Wasseraufnahme bei sehr kurzer Kontaktzeit erreicht wird und gleichzeitig ein hohes und stabiles Quellvolumen innerhalb kürzester Einwirkzeit ausgebildet wird. Der zusätzlich eingesetzte unretardiert eingestellte Celluloseether bewirkt dagegen wegen seines völlig anderen Löseverhaltens eine Art "Kugellagereffekt", der zur Erzielung einer ausreichend hohen Verschiebbarkeit der Tapete auf dem Untergrund erforderlich ist.

Das Klebstoffpulver wird in einem separaten Prozess homogen gemischt und der Auftrag über die beschriebene Auftragsvorrichtung so vorgenommen, dass eine Entmischung praktisch ausgeschlossen werden kann.

Das Klebstoffpulver wird über die gesamte Breite der Bahn nach einem voreingestellten Streuprofil mit Hilfe des Streutrichters 16 mit eingebauter rotierender Bodenbürste und einem Siebboden mit vorgegebener Lochungsanordnung eingestreut. Im allgemeinen liegt die Auftragsmenge bei 10 bis 25 g/m².

Zur besseren Einbettung des Klebstoffpulvers in das Feuchtbett sind im Bereich unmittelbar hinter der Streuzone mehrere Klopfwalzen 13 angeordnet, die mit quadratischem Profil von unten gegen die Bahn aufgrund ihrer Rotation "klopfen", wodurch das Klebstoffpulver entweder eingebettet oder geringfügig aufgewirbelt wird. Durch die Aufwirbelung wird die Absaugvorrichtung 18 unterstützt und somit ein weitestgehend staubfreies Auftragsprofil unter produktionstechnischen Bedingungen reproduzierbar eingestellt. In einer speziellen Verfahrensvariante kann der Auftrag vorzugsweise auch so gesteuert werden, dass er einem vordefinierten Auftragsprofil folgt mit dem Ergebnis, dass im späteren Nahtbereich eine hohe Durchschnittsmenge als im Mittelteil der zu beschichtenden Vliestapete resultiert, um den verlegetechnischen Anforderungen in besonderer Weise gerecht zu werden. Das gewünschte Auftragsprofil wird insbesondere durch eine entsprechende Ausbildung des eingesetzten Siebbodens bzw. der Bürstenanordnung im Streutrichter 16 erreicht.

Ein besonderer Vorteil der beschriebenen erfindungsgemäßen Anordnung ist, dass die vom Klebstoffgemisch ausgehende Gefahr von Staubexplosionen sicher ausgeschlossen werden kann, wenn zusätzlich die erforderlichen Vorsichtsmaßnahmen eingehalten und alle Geräteteile vorschriftsmäßig geerdet worden sind.

Das "wässrige Bindemittelsystem" ist eine niedrigviskose Dispersion, deren Film leicht reemulgierbar ist. Sie soll der Klebstoffschicht nach der anschließenden Trocknung einen sicheren Halt und genügend Eigenfestigkeit geben mit dem Ziel, bei Konfektionierung, Transport und Lagerung der Tapete sowie beim trockenen Abrollen und möglichem Zuschnitt der Tapete keinen Abrieb der Rückseitenbeschichtung befürchten zu müssen. Andererseits darf die Klebstoffschicht natürlich auch keine Blockneigung auslösen. In Frage kommen als wäßrige Bindemittel zumeist die üblichen Polyvinylacetat-Dispersionen mit einem

Festkörpergehalt von 20 bis 55 Gew.-%, vorzugsweise 30 bis 50 Gew.-% und mit einer Viskosität, die einfaches Sprühen und eine gute Penetration in den Klebstofffilm, gewährleistet. Gemische von Polyvinylacetat-Dispersion mit Polyvinylalkohol-Lösung sind ebenfalls geeignet, desgleichen unverdünnte und damit niedrigviskose wasserbasierte Polyvinylacrylamid-Dispersionen. Eine bimodale Teilchengrößenverteilung kann sinnvoll sein, um die kaschierende Strukturverfestigung mit der richtigen Oberflächenbeschaffenheit gleichermaßen zu gewährleisten. Ebenfalls kann im Einzelfall sogar ein Besprühen mit reinem Wasser bei sofortiger Aktivierung und somit oberflächlicher "Verbackung" der einzelnen Feststoffpartikel ausreichend sein, wobei neben Kostenüberlegungen vor allem die Aufschlussgeschwindigkeit ausschlaggebend für die Wahl des geeigneten wässrigen Bindemittels sind. Der Anteil des Bindemittels an der Klebstoffschicht insgesamt macht 0 bis 15, insbesondere 5 bis 10 g pro m² Klebstoffschicht bzw. Tapete aus.

Die Trocknung der feuchten Klebstoffschicht sowie der Tapete insgesamt erfolgt bei Temperaturen im Bereich von 140 bis 160 °C, insbesondere im Bereich von 145 bis 155 °C. Natürlich hängt die Trocknungstemperatur von den Umständen ab, z.B. von der Bandgeschwindigkeit, der aufgetragenen Wassermenge, der Vliesdicke usw..

Die so mit einer Klebstoffschicht vorbeschichtete Rohtapete wird in der sich anschließenden zweiten Herstellungshälfte bei wesentlich höherer Maschinengeschwindigkeit auf der Sichtseite bedruckt und/oder beschichtet, auf die Normbreite von 530 mm beschnitten, auf die Normrolle abgelängt und somit endkonfektioniert. Natürlich ist der Prozess der Rückseitenbeschichtung und Bedruckung bzw. Endkonfektionierung grundsätzlich auch in-line ohne den Zwischenschritt einer Aufballung möglich. Aus Kosten-, Flexibilität- und/oder Qualitätsgründen ist die Realisierung aber nur in seltenen Fällen möglich.

Die erfindungsgemäßen Tapeten werden zweckmäßigerweise in luftdicht abgeschlossenen Polyethylenbeuteln trocken gelagert.

Die erfindungsgemäße Tapete zeichnet sich vor allem durch eine hohe Anfangshaftung im nassen Zustand augenblicklich nach ihrer Benetzung sowie durch ihre Verschiebbarkeit zur Korrektur der Bahn aus.

Zum Tapezieren muss die Klebstoffschicht durch Anfeuchten aktiviert werden. Das ist im Prinzip durch direktes Anfeuchten der Tapetenrückseite möglich oder indirekt durch Applikation der Trockentapete an dem angefeuchteten Untergrund. Natürlich ist auch ein Anfeuchten sowohl der Tapete als auch des Untergrundes möglich. Die Aktivierung des Klebstoffes benötigt nur bis zu 5 Sekunden, vorzugsweise nur bis zu 3 Sekunden. Danach ist die Tapetenrückseite ausreichend klebrig für eine Tapezierung.

Ob man danach tatsächlich gleich mit der Tapezierung beginnt, hängt von der Tapete ab: Bei einer dimensionsstabilen Tapete, insbesondere bei einer Vliestapete kann sofort tapeziert werden. Bei nicht dimensionsstabilen Tapeten muss eine Weichzeit zum Ausgleich der Dimensionsänderung abgewartet werden. Diese Weichzeit ist erforderlich, um die Trockenspannungen innerhalb der Tapete zu überwinden, insbesondere aber, um Dimensionsveränderungen der Tapete durch Anfeuchtung sicher auszugleichen. Diese Dimensionsveränderung ist materialabhängig und bedeutet üblicherweise eine Ausdehnung um bis zu 5 %, vereinzelt aber auch ein Schrumpfen. Falls kein Ausgleich der Dimensionsveränderungen abgewartet wird, ist mit einem späteren Öffnen der Nähte im Stoßbereich der Tapete beim Antrocknen auf der Wand zu rechnen. Offene Nähte beeinträchtigen erheblich die Optik der Tapezierung und sollten daher unter allen Umständen vermieden werden.

Daraus ergeben sich mehrere mögliche Tapezier-Verfahren bezüglich der Anfeuchtung: Es können der Untergrund und/oder die Rückseite der Tapete angefeuchtet werden. Außerdem ist noch wichtig, ob eine Weichzeit eingehalten werden muss oder nicht.

Wenn die Weichzeit eingehalten werden muss, wird die Tapetenrolle in ein trogförmig ausgefülltes Wasserband gelegt, aus der die Tapetenbahn durch einfaches Abrollen entnommen, auf die gewünschte Bahnlänge geschnitten und für die erforderliche Zeit des vom Hersteller empfohlenen Weichprozesses in zusammengelegtem Zustand gelagert wird, bis die Tapetenbahn etwa 10 bis 15 Minuten nach erfolgter Aktivierung auf der zuvor sorgfältig vorbereiteten Wand appliziert wird.

Wenn keine Weichzeit eingehalten werden muss, bietet sich an, die Rückseite der Tapete anzufeuchten und dann die Tapete sofort auf den Untergrund aufzutragen. Dazu können die vom Weichprozess her bekannten Hilfsgeräte verwendet werden. Zweckmäßigerweise wird aber nicht die ganze Tapetenrolle ins Wasser getaucht, sondern nur das gerade zu tapezierende Tapetenstück. Noch einfacher ist es, die Tapetenrückseite über einen feuchten Schwamm zu ziehen.

Im einfachsten Fall tapeziert man unter Verwendung der erfindungsgemäßen Tapeten, indem man a) die Tapetenbahn mit Wasser befeuchtet und b) die befeuchtete Tapetenbahn an die Wand drückt. Vorzugsweise wird die Tapetenbahn nach dem Andrücken in der gewünschten Länge von der Tapeten-Rolle abgeschnitten und gegebenenfalls in ihrer Lager korrigiert. Zweckmäßigerweise wird beim Tapezieren mit den erfindungsgemäßen Tapeten die Tapetenbahn einseitig, auf der Klebstoffseite nur mit einer ausreichenden Menge zur Aktivierung des Wassers befeuchtet und die befeuchtete Tapetenbahn innerhalb von wenigen Sekunden nach der Befeuchtung an die trockene und saugfähige Wand gedrückt.

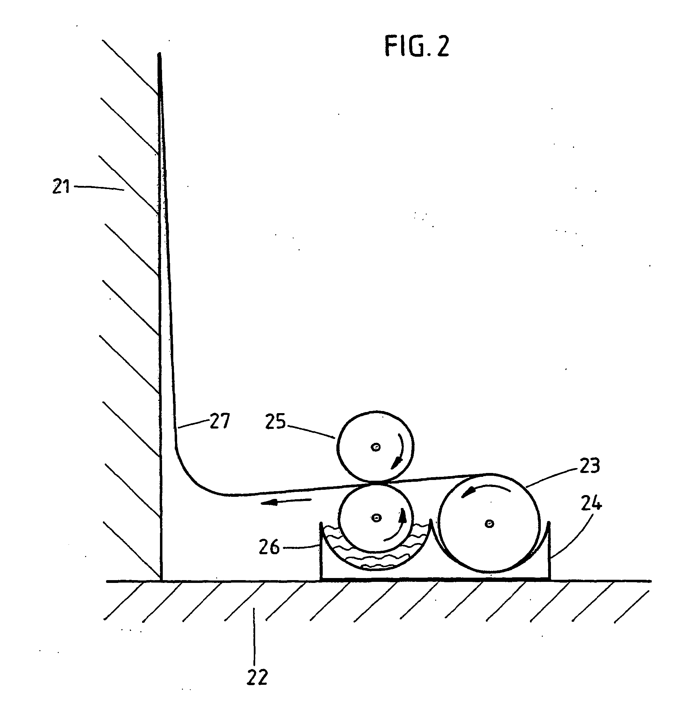

In Fig. 2 wird eine mögliche Anordnung zum Tapezieren dargestellt: Es soll eine Wand 21 in einem Zimmer mit Fußboden 22 tapeziert werden. Dazu wird die Tapeten-Rolle 23 in eine Mulde einer Tapezier-Vorrichtung 24 gelegt, in deren zweite Mulde sich das Walzenpaar 25 befindet. Eine Walze ragt in das dort befindliche Wasser 26. Die erfindungsgemäße Tapetenbahn 27 wird beim Durchgang durch das Walzenpaar 25 einseitig mit Wasser 26 angefeuchtet und kann dann direkt an die Wand 21 geklebt werden. Danach wird die Tapetenbahn 27 abgeschnitten und die Tapezier-Vorrichtung 23 um die Breite einer Tapetenbahn 27 verschoben.

Ausgehend von dem Tapetenabroller gemäß der DE 20207520 U1 ist auch ein mobiler handhabbarer Tapetenabroller möglich, so dass damit die Tapetenbahn auch mit Wasser angefeuchtet wird und die erfindungsgemäße Kleister-beschichtete Tapetenbahn direkt auf eine uneingekleisterte Wand aufgetragen werden kann. Dazu muss in den bekannten Tapetenabroller ein Wassertrog integriert werden. Er sollte ein ausreichend großes Fassungsvermögen für Wasser haben, so dass damit eine Eurorolle angefeuchtet werden kann. Zum Aktivieren der Klebeschicht einer Eurorolle sind mindestens ein Liter Wasser erforderlich. Der Wassertrog ist vorzugsweise kardanisch aufgehängt. Die kardanische Aufhängung ist erforderlich, um eine weitgehend lagenunabhängige Verarbeitung einschließlich der Arbeit "über Kopf" etwa bei der Tapezierung von Zimmerdecken zu ermöglichen, ohne dass es zu Spritzern oder unbeabsichtigtem Wasserverlust kommt. Die Tapete wird erfindungsgemäß so aus dem Gerät geführt, dass die aktivierte Kleisterbeschichtung unmittelbar zur Wand zeigt, und somit die Tapezierung in nahezu gleicher Weise wie vorbeschrieben erfolgen kann, mit dem wesentlichen Unterschied, dass erfindungsgemäß nunmehr eine aktivierte, Kleister-vorbeschichtete Vliestapete verarbeitet wird.

Der Vorteil eines solchen vorgeschlagenen Auftragsgerätes zur Verarbeitung von Vliestapeten ist offenkundig und liegt in der extrem einfachen und sauberen Tapezierung. Natürlich erhöht sich durch den vorgeschlagenen integrierten Wasserbehälter das Gesamtgewicht der Auftragsvorrichtung. Es ist auch darauf zu achten, dass das Gerät stets halbwegs waagerecht gehalten wird.

Wenn keine Weichzeit einzuhalten ist, bietet sich noch eine andere Möglichkeit an, nämlich den Untergrund vollflächig mit Wasser oder mit einem wässrigen System anzufeuchten und die Tapeten im trockenen Zustand zu applizieren. Hilfsgeräte dazu sind mehrfach beschrieben worden, z.B. in der DE 10138157 A1 und in der DE 20207520 U1. Dabei handelt es sich um mobile handhabbare Tapetenabroller. Vorzugsweise werden jedoch sowohl der Untergrund als auch die Rückseite der Tapete angefeuchtet.

Die Erfindung wird nun im einzelnen anhand von Beispielen beschrieben:

### I Meßmethoden

### 1. Blocktest für Tapeten

### a) Prinzip

Die zu prüfenden Tapeten werden auf ein definiertes Format zugeschnitten und unter definiertem Druck über einen definierten Zeitraum bei definierter Temperatur so gelagert, dass einmal die zu prüfende Fläche gegeneinander und einmal gegen die Rückseite gelegt wird.

### b) Durchführung

Die zu prüfenden Tapeten werden bei Raumtemperatur gelagert.

Je nach Anforderung werden aus der zu prüfenden Tapete mittels Schablone und Messer mindestens 9 Proben in der Größe 1 x 1 oder 5 x 5 cm Kantenlänge zugeschnitten. Es werden pro Tapete drei Prüfungen durchgeführt, für jede Prüfung werden drei Probestücke benötigt.

Zwei der Probestücke werden mit den zu prüfenden Flächen gegeneinander gelegt (Gesicht auf Gesicht) und ein Probestück mit der zu prüfenden Fläche gegen die Rückseite der zu prüfenden Fläche (Gesicht gegen Rücken).

Die Normalprüfung erfolgt an Proben von 5 x 5 cm Kantenlänge, über einen Zeitraum von 30 Min. bei einer Temperatur von 40 Grad in einem Trockenschrank.

Die vorbereiteten zu prüfenden Proben werden zwischen zwei Glasplatten gelegt und dann mit einem Gewicht von 10 kg beschwert.

Glasplatten und Gewicht werden ständig bei Prüftemperatur im Trockenschrank gelagert. Nach Ablauf der Prüfzeit werden die Proben aus dem Trockenschrank entnommen und auf einer Glasplatte abgekühlt.

Nun versucht man nacheinander die Proben zu trennen, erst Gesicht auf Gesicht und dann Gesicht gegen Rücken.

Beurteilt wird akustisch und visuell.

### Beurteilung:

| | |
|---|---|
| Proben fallen auseinander | Blocktest 0 |
| fast kein Anhaften | Blocktest 1 |
| stellenweise leichtes Knistern | Blocktest 2 |
| gleichmäßiges leichtes Knistern | Blocktest 3 |
| starkes gleichmäßiges Knistern ohne Ausriss | Blocktest 4 |
| sehr starkes Knistern mit Ausriss | Blocktest 5 |
| vollkommene Verklebung | Blocktest 6 |

### 2. Messung der Dimensionsstabilität

Ein exakt 10 mal 10 cm großes Tapetenstück wird exakt parallel bzw. senkrecht zur Bahnlänge ausgeschnitten und auf der Kleisterseite gleichmäßig mit genau 2 g eines gut aufgeschlossenen Spezialkleisters (Metylan Spezial, Ansatzverhältnis 1 :20 in destilliertem Wasser) eingestrichen und die Auftragsmenge durch Differenzwägung kontrolliert.

Anschließend wird bei laufender Stoppuhr das Tapetenstück auf eine Glasplatte von ebenfalls genau 10 mal 10 cm aufgelegt, so dass die Kanten von Tapete und Glasplatte genau übereinander liegen. Im zeitlichen Abstand von 3, 5 und 7 Minuten nach dem Aufstrich wird die Dimensionsänderung in Breite und Länge gemessen und in % der Ausgangsmaße festgehalten. Die Messung erfolgt in einem Klimaraum bei Normklima.

### II. Ausgangsstoffe

| | |
|---|---|
| 66,7% | einer feinteiligen Quellstärke, nämlich Weizenquellstärke Typ 90 von der Fa. Crespel & Deiters, |
| 5% | einer gemahlenen Carboxymethylstärke, nämlich Solvitose 2426 LA von Fa. AVEBE, |
| 5% | eines feingemahlenen, retardierten CE, nämlich MC 12000 PR von der Fa. Hercules, |
| 10% | eines feingemahlenen CE, nämlich MC 3000 P von der Fa. Hercules, |
| 9% | eines Sprengmittels auf Basis einer Cellulosefaser, nämlich Arbocel FT 600 von der Fa. JRS Rettenmaier, |
| 2% | eines mineralischen Füllstoffes, nämlich Omyacarb 10 GU von der Fa. Omya, |
| 0,2% | eines Konservierungsstoffes, nämlich Acticide MBS von der Fa. Thor-Chemie, |
| 0.1% | eines nichtionogenen Netzmittels, nämlich Dehydol 980 von der Fa. Cognis, |
| 2% | eines Polyvinylacetat-Redispersionspulvers, nämlich Elotex HM 110 von der Fa. Elotex |

### III. Herstellung einer Kleister-beschichteten Vlies-Tapete

Die Ausgangsstoffe werden gemischt und dann mit Hilfe eines Siebes auf die angefeuchtete Vlies-Tapete aufgestreut. Die Vlies-Tapete wird getrocknet.

### IV. Tapezieren

Die Kleister-beschichtete Vlies-Tapete wird angefeuchtet, indem man sie mit einem feuchten Schwamm betupft. Innerhalb von wenigen Sekunden wird dann die Vlies-Tapete mit dem aktivierten Kleister auf eine Gipskartonplatte gedrückt. Sie lässt sich darauf verschieben. Danach klebt sie so fest, dass sie sich weder in senkrechter noch in waagerechter Stellung (über Kopf) von der Gipskartonplatte löst.

### Bezugszeichen-Liste

1. Vlies
2. Klebstoffwanne
3. Auftragsrolle
4. Umkehr-Walze
5. Anpress-Walzen
6. Papier-Obermaterial
7. Präge-Walze
8. Andruck-Walze
9. Wanne
10. Luftbürste
11. Umlenkrolle
12. Streutrichter
13. Klopf-Walzen
14. Breitschlitz-Absaugung
15. pneumatische Rückführung
16. Feststoff-Abscheider
17. Bedüsungseinrichtung
18. Trockner
19. Schneid-Vorrichtung
21. Wand
22. Fußboden
23. Tapeten-Rolle
24. Tapezier-Vorrichtung
25. Walzenpaar
26. Wasser
27. Tapetenbahn

## Patentansprüche

1. Tapete mit einer im trockenen Zustand nicht klebrigen, aber mit Wasser aktivierbaren Klebstoffschicht auf ihrer Rückseite, **dadurch gekennzeichnet, dass** die Klebstoffschicht folgende Komponenten in folgenden Konzentrationsbereichen, bezogen auf die Klebstoffschicht insgesamt enthält:
A) 0,1 bis 10 Gew.-% an mindestens einem feingemahlenen und retardiert eingestellten Celluloseether,
B) 0,1 bis 15 Gew.-% an mindestens einem pH-Regulator für den Bereich von 9,5 bis 11,5,
C) 0,1 bis 10 Gew.-% mindestens eines feingemahlenen und unretardiert eingestellten Celluloseethers oder Guars HGP,
D) 3 bis 15 Ges.-% mindestens eines Sprengmittels,
E) 60 bis 90 Gew.-% an gemahlener Quellstärke,
F) 0 bis 0,5 Gew.-% mindestens eines nicht-ionischen Netzmittels,
G) 0 bis 0,5 Gew.-% mindestens eines Konservierungsmlttels,
H) 0 bis 3 Gew.-% mindestens eines mineralischen Füllstoffes und
I) 0 bis 5 Gew.-% an Polyvinylacetat in Form eines Redispersionspulvers.

2. Tapete nach Anspruch 1, **dadurch gekennzeichnet, dass** die Klebstoffkomponenten nach Anspruch 1 in einem Bindemittel eingebettet sind.

3. Tapete nach Anspruch 1, **dadurch gekennzeichnet, dass** die Klebstoffschicht in einer Menge von 5 bis 30 g an Klebstoff gemäß Anspruch 1 pro m² Tapete vorhanden ist.

4. Tapete nach Anspruch 2, **dadurch gekennzeichnet, dass** das Flächengewicht des Bindemittels bis 15 g Bindemittel pro m² Tapete ausmacht.

5. Tapete nach Anspruch 3, **dadurch gekennzeichnet, dass** die Klebstoffschicht ein Dickenprofil aufweist, wobei die Ränder in einer Breite von 2 bis 10 cm 1,5fach dicker als die Mitte sind.

6. Tapete nach Anspruch 1, **dadurch gekennzeichnet, dass** sie auch bei Kontakt mit Wasser dimensionsstabil ist.

7. Tapete nach Anspruch 6, **dadurch gekennzeichnet, dass** mindestens eine Papierschicht auf einem Vlies aus synthetischen Fasern als Trägermaterial kaschiert ist.

8. Tapete nach Anspruch 6, **gekennzeichnet durch** eine solche Reißfestigkeit, dass sie auch nach der Trocknung vollständig abziehbar ist, sich also trocken abziehen lässt ohne Papierrückstände.

9. Verfahren zur Herstellung der Tapeten nach mindestens einem der Ansprüche 1 bis 8, **dadurch gekennzeichnet, dass** in dem üblichen Verfahren der Tapetenherstellung
a) die Tapetenrtickseite angefeuchtet wird,
b) die angefeuchtete Rückseite mit dem pulverförmigen Klebstoffgemisch gemäß Anspruch 1 bestreut wird und
c) die pulvrige Klebstoffschicht mit einem wässrigen System besprüht wird, und dann die üblichen Verfahrensschritte folgen wie Trocknung, Schneiden, Drucken.

10. Verfahren nach Anspruch 9, **dadurch gekennzeichnet, dass** man in der Verfahrensstufe a) mit folgendem wässrigem System anfeuchtet:
I. 0 bis 60 Gew.-% mindestens einer Polyvinylacetat-Dispersion mit einer Feststoffkonzentration von 30 bis 60 Gew.-%,
II. 0 bis 30 Gew.-% mindestens einer 10 %igen wässrigen Polyvinylalkohol-Lösung,
III. 0 bis 5 Gew.-% an Titandioxid in Pulverform,
IV. 0 bis 0,3 Gew.-% mindestens eines nicht-ionischen Netzmittels,
V. 0 bis 5 Gew.-% mindestens eines Celluloseethers,
VI. 0 bis 0,5 Gew.-% mindestens eines Entschäumers und
VII. 0,1 bis 1,0 Gew.-% mindestens eines Topfkonservierers, wobei der Rest Wasser ist.

11. Verfahren nach Anspruch 9, **dadurch gekennzeichnet, dass** das pulverförmige Klebstoffgemisch in der Verfahrensstufe c) mit einem wässrigen Bindemittelsystem besprüht wird, zweckmäßigerweise mit einer Polyvinylacetat-Dispersion mit 20 bis 55 Gew.-% an Festkörpergehalt.

12. Verfahren zur Verwendung der Tapete nach mindestens einem der Ansprüche 1 bis 8, **dadurch gekennzeichnet, dass** man
a) die Tapetenbahn mit Wasser befeuchtet und
b) die befeuchtete Tapetenbahn an die Wand drückt.

13. Verfahren nach Anspruch 12, **dadurch gekennzeichnet, daß** man
c) die Tapetenbahn nach dem Andrücken in der gewünschten Länge von der Tapeten-Rolle abschneidet und gegebenenfalls in ihrer Lage korrigiert.

14. Verfahren nach Anspruch 12, **dadurch gekennzeichnet, dass** man
a) die Tapetenbahn einseitig auf der Klebstoffseite gerade für die Aktivierung des Klebstoffes notwendigen Menge Wasser befeuchtet und
b) die befeuchtete Tapetenbahn innerhalb von wenigen Sekunden nach der Befeuchtung an die trockene, noch saugfähige Wand drückt.

15. Verfahren nach Anspruch 12, **dadurch gekennzeichnet, dass** man
a) die Tapete im noch aufgerollten Zustand mit Wasser benetzt, indem man die Rolle in einen Trog mit Wasser eintaucht und danach das Wasser von der Rolle abtropfen lässt und dann
b) die Tapete von der Rolle abwickelt und gfeichzeitig an die Wand bzw. die Decke drückt sowie schließlich
c) die einzelne Tapetenbahn in der gewünschten Länge von der Rolle abschneidet und gegebenenfalls in ihrer Lage korrigiert.

16. Verfahren zur Verwendung der Tapete nach mindestens einem der Ansprüche 1 bis 8, **dadurch gekennzeichnet, dass**
- zunächst die Wand angefeuchtet wird und dann
- die noch trockene Tapete an die feuchte Wand bzw. Decke angedrückt wird.

## Claims

1. A wallpaper having on its reverse side an adhesive layer which is non-tacky when dry but is activatable with water, **characterised in that** the adhesive layer contains the following components in the following concentration ranges, relative to the overall adhesive layer:
A) 0.1 to 10 wt.% of at least one finely ground and retarded cellulose ether,
B) 0.1 to 15 wt.% of at least one pH regulator for the range from 9.5 to 11-5,
C) 0.1 to 10 wt.% of at least one finely ground and non-retarded cellulose ether or HPG guar,
D) 3 to 15 wt.% of at least one disintegrant,
E) 60 to 90 wt.% of ground swelling starch,
F) 0 to 0.5 wt.% of at least one nonionic wetting agent,
G) 0 to 0.5 wt.% of at least one preservative,
H) 0 to 3 wt.% of at least one mineral filler and
I) 0 to 5 wt.% of polyvinyl acetate in the form of a redispersion powder.

2. A wallpaper according to claim 1, **characterised in that** the adhesive components according to claim 1 are embedded in a binder.

3. A wallpaper according to claim 1, **characterised in that** the adhesive layer is present in a quantity of 5 to 30 g of an adhesive according to claim 1 per m² of wallpaper.

4. A wallpaper according to claim 2, **characterised in that** the weight per unit area of the binder amounts to up to 15 g of binder per m² of wallpaper.

5. A wallpaper according to claim 3, **characterised in that** the adhesive layer has a thickness profile in which, over a width of 2 to 10 cm, the edges are 1.5 times thicker than the middle.

6. A wallpaper according to claim 1, **characterised in that** it is dimensionally stable also on contact with water.

7. A wallpaper according to claim 6, **characterised in that** at least one layer of paper is laminated onto a synthetic fibre nonwoven as support material.

8. A wallpaper according to claim 6, **characterised by** a tear strength such that, even once dry, it is completely peelable and may thus be dry peeled without leaving paper residues.

9. A method for producing the wallpapers according to at least one of claims 1 to 8, **characterised in that**, in a conventional wallpaper manufacturing method,
a) the reverse side of the wallpaper is moistened,
b) the pulverulent adhesive mixture according to claim 1 is sprinkled onto the moistened reverse side and
c) the pulverulent adhesive layer is sprayed with an aqueous system, and there then follow the conventional method steps such as drying, cutting, printing.

10. A method according to claim 9, **characterised in that** moistening in method step a) is performed with the following aqueous system:
I. 0 to 60 wt.% of at least one polyvinyl acetate dispersion with a solids concentration of 30 to 60 wt.%,
II. 0 to 30 wt.% of at least one 10% aqueous polyvinyl alcohol solution,
III. 0 to 5 wt.% of titanium dioxide in powder form,
IV. 0 to 0.3 wt.% of at least one nonionic wetting agent,
V. 0 to 5 wt.% of at least one cellulose ether,
VI. 0 to 0.5 wt.% of at least one defoamer and
VII. 0.1 to 1.0 wt.% of at least one pot preservative, the remainder being water.

11. A method according to claim 9, **characterised in that** the pulverulent adhesive mixture is sprayed in method step c) with an aqueous binder system, conveniently with a polyvinyl acetate dispersion with a solids content of 20 to 55 wt.%.

12. A method for using the wallpaper according to at least one of claims 1 to 8, **characterised in that**
a) the wallpaper web is moistened with water and
b) the moistened wallpaper web is pressed onto the wall.

13. A method according to claim 12, **characterised in that**,
c) once it has been pressed on, the wallpaper web is cut to the desired length from the roll of wallpaper and its position is optionally corrected.

14. A method according to claim 12, **characterised in that**
a) the wallpaper web is moistened on one side on the adhesive side with exactly the quantity of water required for activation of the adhesive and,
b) within a few seconds after moistening, the moistened wallpaper web is pressed onto the dry, still absorbent wall.

15. A method according to claim 12, **characterised in that**
a) the wallpaper is wetted with water while still rolled up by immersing the roll in a trough of water and then allowing the water to drain off the roll and then
b) the wallpaper is unwound from the roll while simultaneously being pressed onto the wall or ceiling and finally
c) the individual wallpaper web is cut to the desired length from the roll and its position is optionally corrected.

16. A method for using the wallpaper according to at least one of claims 1 to 8, **characterised in that**
- the wall is firstly moistened and then
- the wallpaper is pressed while still dry onto the moist wall or ceiling.

## Revendications

1. Papier peint doté d'une couche de colle, non collante dans l'état sec, mais activable avec de l'eau, sur sa face arrière, **caractérisé en ce que** la couche de colle contient globalement les composants suivants dans les plages de concentration suivantes, par rapport à la couche de colle :
A) 0,1 à 10 % en poids d'au moins un éther de cellulose broyé finement et réglé de façon retardée,
B) 0,1 à 15 % en poids d'au moins un régulateur de pH pour la plage de 9,5 à 11,5,
C) 0,1 à 10% en poids d'au moins un éther de cellulose ou Guar HGP broyé finement et réglé de façon non retardée,
D) 3 à 15 % en poids d'au moins un agent désintégrateur,
E) 60 à 90 % en poids d'amidon gonflant broyé,
F) 0 à 0,5 % en poids d'au moins un agent mouillant non ionique,
G) 0 à 0,5 % en poids d'au moins un agent de conservation,
H) 0 à 3 % en poids d'au moins une matière de charge minérale et
I) 0 à 5 % en poids d'acétate de polyvinyle sous forme d'une poudre de redispersion.

2. Papier peint selon la revendication 1, **caractérisé en ce que** les composants de colle selon la revendication 1 sont enrobés dans un liant.

3. Papier peint selon la revendication 1, **caractérisé en ce que** la couche de colle est présente dans une quantité de 5 à 30 g de colle selon la revendication 1 par m² de papier peint.

4. Papier peint selon la revendication 2, **caractérisé en ce que** le poids surfacique du liant représente jusqu'à 15 g de liant par m² de papier peint.

5. Papier peint selon la revendication 3, **caractérisé en ce que** la couche de colle présente un profil d'épaisseur, les bords étant sur une largeur de 2 a 10 cm, 1,5 fois plus épais que le centre.

6. Papier peint selon la revendication 1, **caractérisé en ce qu'**il est stable dimensionnellement même en cas de contact avec de l'eau.

7. Papier peint selon la revendication 6, **caractérisé en ce qu'**au moins une couche de papier est couchée comme matériau support sur un non-tissé à base de fibres synthétiques.

8. Papier peint selon la revendication 6, **caractérisé par** une résistance à la déchirure telle qu'il peut être enlevé complètement même après le séchage, donc peut être enlevé à l'état sec sans résidus de papier.

9. Procédé pour fabriquer des papiers peints selon au moins l'une quelconque des revendications 1 à 8, **caractérisé en ce que**, dans le procédé classique de fabrication de papier peint,
a) l'arrière du papier peint est humidifié,
b) l'arrière humidifié est parsemé du mélange de colle pulvérulent selon la revendication 1 et
c) la couche de colle sous forme de poudre est pulvérisée avec un système aqueux et les étapes de procédé classiques (séchage, découpe, application de pression), suivent alors.

10. Procédé selon la revendication 9, **caractérisé en ce qu'**on humidifie dans la phase du procédé a) avec le système aqueux suivant :
I. 0 à 60 % en poids d'au moins une dispersion d'acétate de polyvinyle présentant une concentration de matière solide de 30 à 60 % en poids,
II. 0 à 30 % en poids d'au moins une solution aqueuse d'alcool polyvinylique concentrée à 10 %,
III. 0 à 5 % en poids de dioxyde de titane sous forme de poudre,
IV. 0 à 0,3 % en poids d'au moins un agent mouillant non ionique,
V. 0 à 5 % en poids d'au moins un éther de cellulose,
VI. 0 à 0,5 % en poids d'au moins un antimousse et
VII. 0,1 à 1,0 % en poids d'au moins un conservateur en pot, le reste étant de l'eau.

11. Procédé selon la revendication 9, **caractérisé en ce que** le mélange de colle sous forme de poudre est pulvérisé dans l'étape de procédé c) avec un système de liant aqueux, de façon appropriée avec une dispersion d'acétate de polyvinyle présentant 20 à 55 % en poids de matière solide.

12. Procédé pour l'utilisation du papier peint selon au moins l'une quelconque des revendications 1 à 8, **caractérisé en ce qu'**on
a) humidifie la bande de papier peint avec de l'eau et
b) presse la bande de papier peint humidifiée sur le mur

13. Procédé selon la revendication 12, **caractérisé en ce qu'**on
c) découpe la bande de papier peint du rouleau de papier peint après avoir appuyé dessus dans la longueur souhaitée et on la corrige éventuellement dans sa position.

14. Procédé selon la revendication 12, **caractérisé en ce qu'**on
a) humidifie la bande de papier peint d'un côté sur le côté colle avec la quantité d'eau précisément nécessaire pour l'activation de la colle et
b) presse la bande de papier peint humidifiée pendant quelques secondes après l'humidification sur le mur sec et encore absorbant.

15. Procédé selon la revendication 12, **caractérisé en ce qu'**on
a) mouille le papier peint dans l'état encore enroulé avec de l'eau en immergeant le rouleau dans un bac avec de l'eau et en laissant ensuite l'eau s'égoutter du rouleau puis on
b) déroule le papier peint du rouleau et on appuie en même temps sur le mur ou sur le plafond et enfin
c) on découpe la bande de papier peint individuelle du rouleau dans la longueur souhaitée et on la corrige éventuellement dans sa position.

16. Procédé pour utiliser le papier selon au moins l'une quelconque des revendications 1 à 8, **caractérisé en ce que**,
- le mur est d'abord humecté puis
- le papier peint encore sec est appuyé sur le mur ou le plafond humide.
